# EUROPÄISCHE PATENTSCHRIFT

(11) **EP 1 221 245 B1**
(45) Veröffentlichungstag und Bekanntmachung des Hinweises auf die Patenterteilung: **04.01.2006**
(21) Anmeldenummer: 00916892.3
(22) Anmeldetag: 02.03.2000
(51) Int. Cl.: H04M 3/24, H04M 3/32

(54) **SYSTEM, AUSWERTEEINRICHTUNG UND VERFAHREN ZUM ÜBERPRÜFEN DER VON EINER DIGITALEN VERMITTLUNGSSTELLE ERFASSTEN VERBINDUNGSBEZOGENEN KOMMUNIKATIONSDATEN**
SYSTEM, EVALUATION DEVICE AND METHOD FOR VERIFYING CONNECTION-RELATED COMMUNICATION DATA DETERMINED BY A DIGITAL EXCHANGE
SYSTEME, DISPOSITIF D'EVALUATION ET PROCEDE DE VERIFICATION DES DONNEES DE COMMUNICATION RELATIVES A UNE LIAISON, DETECTEES PAR UN CENTRAL NUMERIQUE

(30) Priorität: 19.03.1999 DE 19912414
(43) Veröffentlichungstag der Anmeldung: 10.07.2002
(73) Patentinhaber: Deutsche Telekom AG, 53113 Bonn (DE)
(72) Erfinder: SCHNEIDER, Ernst, D-90579 Langenzenn (DE); SCHMIDT, Monika, D-90402 Nürnberg (DE)
(86) Internationale Anmeldenummer: PCT/EP2000/001809
(87) Internationale Veröffentlichungsnummer: WO 2000/057618

(56) Entgegenhaltungen:
- US-A- 5 729 588

## Beschreibung

Die Erfindung betrifft ein System und ein Verfahren zum Überprüfen der von einer digitalen Vermittlungsstelle erfassten verbindungsbezogenen Kommunikationsdaten sowie eine Auswerteeinrichtung zum Einsatz in einem solchen System bzw. Verfahren.

Ein wesentliches Leistungsmerkmal von digitalen Vermittlungsstellen in einem Telekommunikationsnetz ist die Erfassung der bei Nutzung einer Dienstleistung anfallenden Entgeltdaten. Zu diesem Zweck müssen für jede Kommunikationsverbindung in der digitalen Vermittlungsstelle alle für die Entgeltberechnung notwendigen Kommunikationsdaten erfasst werden. Um die Richtigkeit der Kommunikationsdatenerfassung überprüfen zu können, ist es erforderlich geeignete Testsysteme bereitzustellen. Allerdings sind bestehende Testsysteme lediglich in der Lage, die zu Kommunikationsdatensätzen zusammengefassten Kommunikationsdaten hinsichtlich ihrer formalen Korrektheit zu überprüfen. Die bekannten Testsysteme können daher nur feststellen, ob die Struktur der Kommunikationsdatensätze einer definierten Struktur entsprechen und ob die in Datenfeldern eines Kommunikationsdatensatzes enthaltenden Kommunikationsdaten innerhalb des dem entsprechenden Datenfeld zugeordneten Wertebereichs liegen.

Aus der US-A- 5 729 588 ist ein Aufzeichnungs-Überprüfungssystem bekannt, mit dem Tarifierungsdaten (AMA-Daten), die von einer zu prüfenden Einrichtung für eine aufgebaute Testverbindung erzeugt werden, auf Korrektheit überprüft werden können. Dieses System bildet den Oberbegriff der unabhängigen Ansprüche 1 und 7.

Der vorliegenden Erfindung liegt nunmehr die Aufgabe zugrunde, ein System, eine Auswerteeinrichtung und ein Verfahren verfügbar zu machen, mit denen die von einer digitalen Vermittlungsstelle erstellten Kommunikationsdatensätze mit höherer Genauigkeit auf ihre Korrektheit hin überprüft werden können.

Der Kerngedanke der Erfindung ist darin zu sehen, die von einer digitalen Vermittlungsstelle für wenigstens eine Kommunikationsverbindung erstellten Kommunikationsdatensätze nicht nur hinsichtlich ihrer Struktur, sondern auch hinsichtlich des Inhaltes der in den Kommunikationsdatensätzen enthaltenen Kommunikationsdaten zu überprüfen.

Das technische Problem löst die Erfindung zum einen mit den Merkmalen des Anspruchs 1.

Um nicht nur die Struktur, sondern auch den Inhalt von Kommunikationsdatensätzen auf Korrektheit hin überprüfen zu können, umfaßt das Prüfsystem wenigstens eine mit der digitalen Vermittlungsstelle verbindbare Testeinheit, die eine erste Speichereinrichtung zum Ablegen von vorbestimmten Kommunikationselementen, eine Einrichtung zum Einleiten des Aufbaus wenigstens einer vorbestimmten Test-Kommunitionsverbindung, eine Einrichtung zum Erzeugen eines verbindungsbezogenen Referenzdatensatzes aus den entsprechenden Kommunikationselementen, dem Anfangs- und Endzeitpunkt der Kommunikationsverbindung, sowie eine Einrichtung zum Übermitteln der verbindungsbezogenen Kommunikationselemente zur digitalen Vermittlungsstelle enthält. Das System umfasst ferner mindestens eine digitale Vermittlungsstelle, die unter Ansprechen auf die empfangenen verbindungsbezogenen Kommunikationselemente die dazugehörende Test-Kommunikationsverbindung herstellt. In der digitalen Vermittlungsstelle ist ferner eine Einrichtung zum Erzeugen wenigstens eines verbindungsbezogenen Kommunikationsdatensatzes implementiert. Darüber hinaus weist das System eine der Testeinheit und der digitalen Vermittlungsstelle zugeordnete Auswerteeinrichtung auf, die eine Einrichtung zum Vergleichen des Inhaltes des verbindungsbezogenen Referenzdatensatzes mit dem Inhalt jedes dazugehörenden verbindungsbezogenen Kommunikationsdatensatzes enthält. Die Auswerteeinrichtung verfügt über eine Einrichtung zum Erkennen von einer Test-Kommunikationsverbindung zugeordneten Kommunikationsdatensätzen, insbesondere dann, wenn aus Sicherheitsgründen für eine bestehende Kommunikationsverbindung zu regelmäßigen Zeitpunkten neue Kommunikationsdatensätze ermittelt werden. Ein Zusammengehören mehrerer Kommunikationsdatensätze zu einer Verbindung wird dadurch erkannt, daß in jedem - Kommunikationsdatensatz derselbe verbindungsidentifizierende Dateninhalt (beispielsweise die Ziel- und/oder. Ursprungsadresse) enthalten ist. Die Vergleichseinrichtung ist für diesen Fall derart ausgebildet, daß sie den verbindungsbezogenen Referenzdatensatz mit jedem der zusammengefügten verbindungsbezogenen Kommunikationsdatensätze vergleicht.

Die Auswerteeinrichtung erkennt ferner, daß ein einzelner Kommunikationsdatensatz der zusammengefügten Kommunikationsdatensätze zu dem entsprechenden Referenzdatensatz gehört, wenn der Anfangs- und Endezeitstempel des einzelnen Kommunikationsdatensatzes innerhalb des durch den Anfangs- und Endezeitstempel des Referenzdatensatzes festgelegten Zeitintervalls liegt.

Durch die Anfangszeitstempel der zusammengefügten Kommunikationsdatensätze ist eine zeitliche Reihenfolge auf den Kommunikationsdatensätzen definiert. Die Auswerteeinrichtung erkennt die Folge zusammengehörender Kommunikationsdatensätze als korrekt, wenn bei dem jeweils zeitlich unmittelbar folgenden Kommunikationsdatensatz der Anfangszeitstempel dem Endezeitstempel des unmittelbar vorhergehenden Kommunikationsdatensatzes entspricht, und wenn die durch den Anfangszeitstempel des ersten Kommunikationsdatensatzes und den Endezeitstempel des letzten Kommunikationsdatensatzes definierte Zeitspanne der durch den Anfangszeitstempel und den Endezeitstempel des Referenzdatensatzes festgelegten Gesamtdauer der Test-Kommunikationsverbindung entspricht.

Da die Testeinheit und die digitale Vermittlungsstelle üblicherweise unterschiedliche Datensatzformate benutzen, ist in der Auswerteeinrichtung ferner eine erste Einrichtung zum Umsetzen des Formates des Referenzdatensatzes und eine zweite Einrichtung zum Umsetzen des Formates jedes Kommunikationsdatensatzes in ein einheitliches Format vorgesehen. Durch diese Maßnahme wird vermieden, daß nur Testeinheiten in dem Prüfsystem verwendet werden können, die mit dem Format der digitalen Vermittlungsstelle arbeiten.

An dieser Stelle sei erwähnt, daß in den Ansprüchen und der gesamten Beschreibung der Begriff "Kommunikationsdaten" sowohl Kommunikationselemente als auch die Anfangs- und Endzeitpunkte der dazugehörenden Test-Kommunikationsverbindung umfaßt. Unter den Begriff "Kommunikationselement" fallen wiederum Parameter wie Zieladresse und Ursprungsadresse der Testeinheit, Datum der Kommunikationsverbindung, Dienstetyp, Dienstmerkmal und dergleichen. Dienste sind beispielsweise das Fernsprechen, ISDN oder ANIS-Teilnehmer, Datenkommunikationen und dergleichen. Dienstmerkmale sind beispielsweise Dreierkonferenz, Makeln und dergleichen.

In an sich bekannter Weise umfaßt ein Kommunikationsdatensatz und ein Referenzdatensatz mehrere vorbestimmte Datenfelder. In jedem Datenfeld eines Kommunikations- und Referenzdatensatzes sind Kommunikationsdaten abgelegt. Darüber hinaus ist jedem Datenfeld ein Wertebereich zugewiesen, innerhalb dessen darin enthaltene Kommunikationsdaten liegen müssen. So ist beispielsweise der Wertebereich für das Datenfeld "Datum der Kommunikationsverbindung" durch den Gregorianischen Kalender definiert, während der Wertebereich des Datenfeldes "Anfangszeitpunkt der Verbindung" durch den Zeitbereich von 0 bis 24 Uhr definiert ist. Der Wertebereich für das Datenfeld "Diensttyp" ist durch einen vorbestimmten Satz von Diensten definiert, während der Wertebereich des Datenfeldes "Dienstemerkmale" durch sämtliche zugelassenen Dienstemerkmale definiert ist.

Um einen Kommunikationsdatensatz auch hinsichtlich dessen Stuktur auf Korrektheit überprüfen zu können, weist die Auswerteeinrichtung eine Einrichtung zum Überprüfen der Struktur des Kommunikationsdatensatzes sowie eine Einrichtung zum Überprüfen der Datenfelder daraufhin auf, daß die in einem Datenfeld enthaltenen Kommunikationsdaten innerhalb des jeweiligen Wertebereichs liegen.

Die Auswerteeinrichtung weist ferner eine Einrichtung auf, die prüfen kann, ob jeder in der digitalen Vermittlungsstelle erzeugte Kommunikationsdatensatz zu einer aufgebauten Test-Kommunikationsverbindung gehört. Damit kann zum einen festgestellt werden, ob die digitale Vermittlungsstelle zu jeder aufgebauten Test-Kommunikationsverbindung gültige Kommunikationsdatensätze erzeugt hat, indem die erzeugten Kommunikationsdatensätze mit dem zur Test-Kommunikationsverbindung gehörenden Referenzdatensatz verglichen werden. Zum anderen erkennt die Auswerteeinrichtung, ob zu erzeugten Kommunikationsdatensätzen überhaupt eine Test-Kommunikationsverbindung aufgebaut worden ist.

Obwohl vor jedem Test eine Zeitabstimmung des Testsystems, d. h. eine Zeitabstimmung zwischen der Testeinheit und der digitalen Vermittlungsstelle erfolgt, sind Zeitabweichungen in den Datenfeldern für die Anfangs- und Endzeit der zugehörenden Test-Kommunikationsverbindung unausweichlich. Der Grund für diese Zeitabweichung liegt beispielsweise darin, daß herstellerabhängig die digitalen Vermittlungsstellen Nachkommastellen der Sekundenangaben unterschiedlich behandeln. So werden bei einigen digitalen Vermittlungsstellen Rundundsregeln angewandt, bei anderen werden die Nachkommastellen ohne Rundung abgeschnitten. Deshalb muß die Auswerteeinrichtung bei einer Überprüfung der Datenfelder "Anfangszeitstempel" und "Endezeitstempel" der Test-Kommunikationsverbindung einen vorbestimmten zeitlichen Toleranzbereich berücksichtigen. Ein möglicher Toleranzbereich liegt beispielsweise bei einer Sekunde. Dieser Toleranzbereich ist in der Auswerteeinrichtung abgelegt, auf den die Vergleichseinrichtung bei jeder Auswertung zugreifen kann.

Sowohl die Testeinheit als auch die digitale Vermittlungsstelle verfügen über einen Pufferspeicher, in dem der erzeugte Referenzdatensatz bzw. die verbindungsbezogenen Kommunikationsdatensätze abgelegt werden können.

Gemäß einem weiteren Gesichtspunkt der Erfindung ist eine Auswerteeinrichtung nach Anspruch 7 vorgesehen, die über wenigstens eine Schnittstelle mit der digitalen Vermittlungssstelle und über wenigstens eine weitere Schnittstelle mit einer Testeinheit verbunden werden kann. Eine weitere Einrichtung dient zum Erkennen von zusammenhängenden Kommunikationsdatensätzen, die einer Test-Kommunikationsverbindung zugeordnet sind. Um den Inhalt eines von der Testeinheit erzeugten verbindungsbezogenen Referenzdatensatzes mit dem Inhalt jedes Kommunikationsdatensatzes von zusammenhängenden Kommunikationsdatensätzen, die die digitale Vermittlungsstelle hinsichtlich einer Test-Kommunikationsverbindung erzeugt, vergleichen zu können, ist eine entsprechend ausgebildete Vergleichseinrichtung vorgesehen.

Liegen der Referenzdatensatz und die Kommunikationsdatensätze in unterschiedlichen Formaten vor, sorgen entsprechende Konvertierungseinrichtungen für eine Umsetzung in ein einheitliches, von der Vergleichseinrichtung bearbeitbares Format.

Gemäß einem weiteren Gesichtspunkt der Erfindung wird ein Verfahren zum Überprüfen der von einer digitalen Vermittlungsstelle erfassten verbindungsbezogenen Kommunikationsdaten verfügbar gemacht, wie es in Anspruch 12 umschrieben ist.

Vor jedem Testbeginn werden mehrere Kommunikationselemente in wenigstens einer mit einer digitalen Vermittlungsstelle verbindbaren Testeinheit abgelegt. In Abhängigkeit des gewählten Tests leitet die Testeinheit den Aufbau wenigstens einer vorbestimmten Test-Kommunikationsverbindung ein. Zusätzlich werden die entsprechend dem ausgewählten Test benötigten verbindungsbezogenen Kommunikationselemente zur digitalen Vermittlungsstelle übertragen. Unter Ansprechen auf die empfangenen verbindungsbezogenen Kommunikationselemente stellt die digitale Vermittlungsstelle die dazugehörende Test-Kommunikationsverbindung her. An dieser Stelle sei angemerkt, daß eine eingesetzte Testeinheit sowohl eine rufende als auch eine gerufene Einrichtung simulieren kann, so daß eine Test-Kommunikationsverbindung an ein und derselben Testeinheit ankommt und abgeht. Natürlich ist es auch denkbar, eine Test-Kommunikationsverbindung zwischen zwei getrennten Testeinheiten aufzubauen. Im nächsten Schritt erzeugt die Testeinheit aus den verbindungsbezogenen Kommunikationselementen, die durch den ausgewählten Test definiert sind, und dem Anfangs- und Endezeitpunkt der entsprechenden Test-Kommunikationsverbindung einen Referenzdatensatz. Auch die digitale Vermittlungsstelle erzeugt aus den empfangenen Kommunikationselementen und dem ermittelten Anfangs- und Endzeitpunkt der Testkommunikationsverbindung wenigstens einen Kommunikationsdatensatz. Nach dem Verbindungsabbau werden sowohl der Referenzdatensatz als auch jeder Kommunikationsdatensatz der entsprechenden Test-Kommunikationsverbindung zu einer Auswerteeinrichtung übertragen. In der Auswerteeinrichtung werden anschließend der Inhalt des verbindungsbezogenen Referenzdatensatzes mit dem Inhalt jedes dazugehörenden Kommunikationsdatensatzes verglichen.

Falls das Format des Referenzdatensatzes und das Format des Kommunikationsdatensatzes nicht übereinstimmen, werden die unterschiedlichen Formate in der Auswerteeinrichtung in ein einheitliches Format umgesetzt, bevor der Vergleichsschritt durchgeführt wird.

Ein Kommunikationsdatensatz wird als fehlerhaft angezeigt, wenn dessen Inhalt nicht dem Inhalt des dazugehörenden Referenzdatensatzes zugeordnet werden kann, wenn dessen Struktur nicht einer vorbestimmten Struktur entspricht, oder wenn die in einem Datenfeld enthaltenen Kommunikationsdaten nicht innerhalb des dem Datenfeld zugeordneten Wertebereichs liegen.

Die Erfindung wird nachfolgend anhand eines Ausführungsbeispiels in Verbindung mit den beiliegenden Zeichnungen näher erläutert. Darin zeigen:
- Fig. 1: den schematischen Aufbau des erfindungsgemäßen Prüfsystems und
- Fig. 2: ein beispielhaftes Format eines Kommunikations-bzw. Referenzdatensatzes.

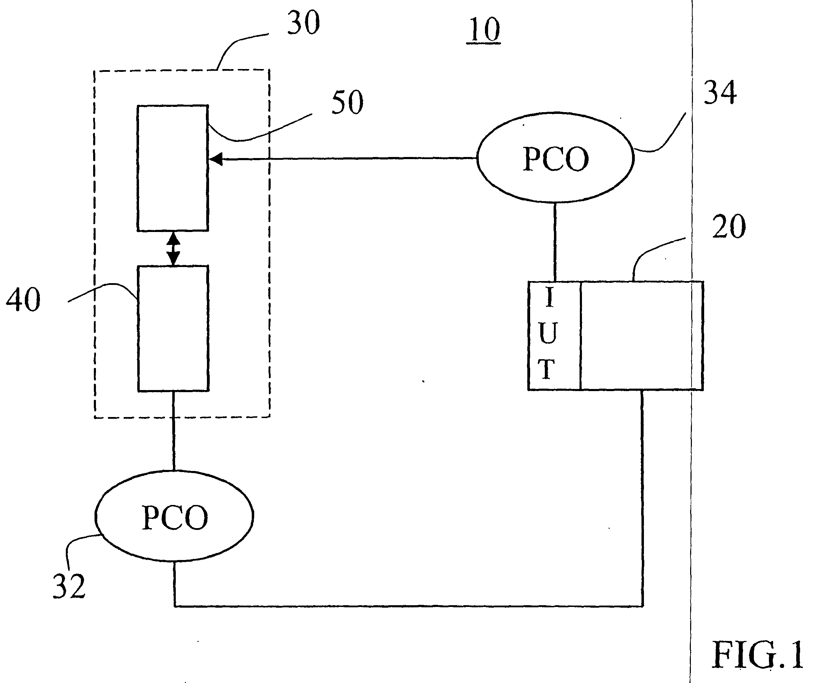

Fig. 1 zeigt den schematischen Aufbau des erfindungsgemäßen Prüfsystems 10. Das Prüfsystem 10 umfaßt wenigstens eine digitale Vermittlungsstelle 20 sowie eine Prüfanordnung 30, die wenigstens eine Testeinheit 40, und eine Auswerteeinrichtung 50 umfaßt, die sowohl mit der digitalen Vermittlungsstelle 20 als auch mit der Testeinheit 40 verbindbar ist. Die Testeinheit 40 ist über einen teilnehmerseitigen Telekommunikationsanschluß mit der zugeordneten digitalen Vermittlungsstelle 20 verbunden. In Anlehnung an die Norm ISO 9646 kommuniziert die Testanordnung 30 über zwei sogenannte Steuer- und Beobachtungspunkte 32, 34 (Points of Control and Observation, PCO) mit der zu prüfenden Implementation (Implementation Under Test, IUT), die in der zu prüfenden digitalen Vermittlungsstelle 20 eingebettet ist. Die Testeinheit 40 ist ferner derart ausgebildet, daß sie in Abhängigkeit eines ausgewählten Testfalls die dazugehörenden Kommunikationselemente - auch Abstract Service Primitives (ASP) - genannt, über den Steuer- und Beobachtungspunkt 32 und den teilnehmerseitigen Telekommunikationsanschluß zur digitalen Vermittlungsstelle 20 übertragen kann. Bei den Kommunikationselementen, die zuvor in Abhängigkeit des ausgewählten Testfalls in der Testeinheit 40 abgelegt worden sind, handelt es sich beispielsweise um die Zieladresse, die Ursprungsadresse, das Datum der Test-Kommunikationsverbindung, Dienstetypen und Dienstemerkmale. Über eine genormte Hardware-Schnittstelle der zu prüfenden digitalen Vermittlungsstelle 20 werden dann die von der digitalen Vermittlungsstelle 20 erzeugten Kommunikationsdatensätze über den zweiten Steuer- und Beobachtungspunkt 34 zur Auswerteeinrichtung 50 übertragen.

Nachfolgend wird die Funktions- und Arbeitsweise des Testsystems 10 anhand eines Szenarios näher erläutert.

Sinn und Zweck des erfindungsgemäßen Testsystems 10 ist die Validierung von in der digitalen Vermittlungsstelle 20 erzeugten Kommunikationsdatensätzen, die zur Entgeltberechnung einer kostenpflichtigen Kommunikationsverbindung verwendet werden. Nur wenn die Kommunikationsdatensätze korrekt erzeugt werden, kann eine fehlerfreie Entgeltberechnung stattfinden.

Zunächst wird ein bestimmter Testfall ausgewählt, der aus einem einzelnen Testschritt oder aus mehreren parallel oder sequentiell laufenden Testschritten bestehen kann. Für den vorliegenden Testfall sei angenommen, daß eine gewöhnliche Fernsprechverbindung zwischen zwei ISDN-Endgeräten hergestellt werden soll. Als Dienstetyp wird daher der Dienst "Fernsprechverbindung zwischen ISDN-Geräten" verwendet. Ferner sei angenommen, daß die Testeinheit 40 sowohl den rufenden ISDN-Teilnehmer als auch den gerufenen ISDN-Teilnehmer simulieren kann. Durch den ausgewählten Testfall sind auch die Ziel- und Ursprungsadresse der beiden Teilnehmer festgelegt. Datum und Anfangszeitpunkt ergeben sich durch den Zeitpunkt des Aufbaus der Test-Kommunikationsverbindung. All diese zu dem ausgewählten Testfall gehörenden Kommunikationselemente sind in einem Speicher der Testeinheit 40 abgelegt.

Vor dem Start des Tests muß sichergestellt werden, daß alle nicht zur Testkonfiguration gehörenden Anschlüsse der digitalen Vermittlungsstelle 20 inaktiv sind und während des Testablaufs nicht aktiviert werden können. Dies ist eine Voraussetzung, um prüfen zu können, ob die während des Testlaufs erzeugten Kommunikationsdatensätze einem bestimmten Referenzdatensatz zugeordnet werden können.

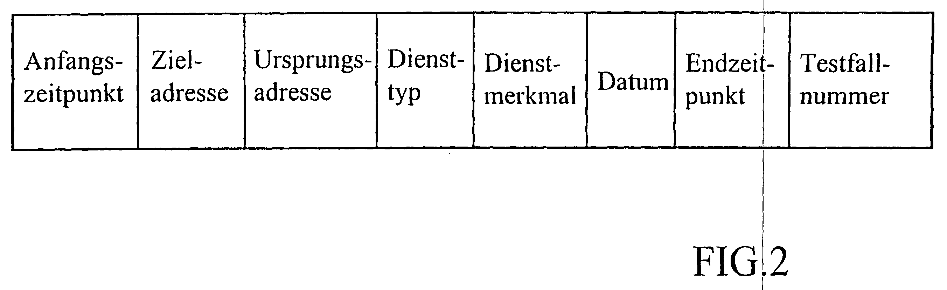

Zu Beginn der Testprozedur werden die zu dem Test gehörenden Kommunikationselemente von der Testeinrichtung 40 aus dem Speicher über den PCO 32 und den Telekommunikationsanschluß zur IUT der digitalen Vermittlungsstelle 20 übertragen. In Abhängigkeit von den empfangenen Kommunikationselementen baut die digitale Vermittlungsstelle 20 die ausgewählte Test-Kommunikationsverbindung zu dem Teilnehmer mit der entsprechenden Zieladresse auf. Der Anfangs-Zeitstempel der aufgebauten Test-Kommunikationsverbindung wird anschließend sowohl in der Testeinheit 40 als auch in der digitalen Vermittlungsstelle 20 festgehalten. Nach dem Auslösen der Test-Kommunikationsverbindung wird der Endezeitstempel der Kommunikationsverbindung ebenfalls in der Testeinheit 40 und der digitalen Vermittlungsstelle 20 ermittelt und jeweils in einem Speicher abgelegt. Nach dem Ende der Test-Kommunikationsverbindung erzeugt die Testeinheit 40 aus den zu dem ausgewählten Test gehörenden Kommunikationselementen sowie dem Anfangs- und Endzeitpunkt der Test-Kommunikationsverbindung einen Referenzdatensatz, dessen beispielhaftes Format in Fig. 2 dargestellt ist. Der Referenzdatensatz setzt sich beispielsweise aus den Datenfeldern "Anfangszeitpunkt", "Zieladresse", "Ursprungsadresse", "Diensttyp", "Dienstmerkmal", "Datum", "Endzeitpunkt" und "Testfallnummer" zusammen. Dieser Referenzdatensatz wird in einem Speicher der Testeinheit 40 abgelegt. Auch die digitale Vermittlungsstelle 20 bildet aus den empfangenen Kommunikationselementen und dem Anfangs- und Endezeitpunkt der Test-Kommunikationsverbindung einen entsprechenden verbindungsbezogenen Kommunikationsdatensatz, dessen Struktur dem in Fig. 2 gezeigten Format entsprechen kann. Der erzeugte Kommunikationsdatensatz wird wiederum in einem Puffer abgelegt.

In der Auswerteeinrichtung 50 werden in Abhängigkeit von dem ausgewählten Test jedem Datenfeld des Referenz- bzw. Kommunikationsdatensatzes ein vorbestimmter Wertebereich zugeordnet. Der Wertebereich der Datenfelder "Anfangszeitpunkt" und "Endezeitpunkt" ist durch die Uhrzeit von 0 bis 24 Uhr definiert. Der Wertebereich der Datenfelder "Zieladresse" und "Ursprungsadresse" umfasst mehrere zulässige Adressen. Der Wertebereich der Datenfelder "Diensttyp" und "Dienstmerkmal" ist durch die vorgegebenen unterschiedlichen Dienste und Dienstmerkmale definiert. Der Wertebereich des Datenfeldes "Datum" ist beispielsweise durch den Gregorianischen Kalender definiert.

Damit bei dem nachfolgend noch ausführlicher zu beschreibenden Vergleichsschritt in der Auswerteeinrichtung 50 die Datenfelder "Anfangszeitpunkt" und "Endezeitpunkt" der Test-Kommunikationsverbindung fehlerfrei verglichen werden können, muß die Vergleichseinrichtung der Auswerteeinrichtung 50 einen zeitlichen Toleranzbereich berücksichtigen, da zwischen dem Zeitgeber der Testeinheit 40 und dem der digitalen Vermittlungsstelle 20 systembedingte Ungenauigkeiten auftreten können. Bei einem Vergleich der Datenfelder "Anfangszeitpunkt" oder "Endezeitpunkt" sind daher beispielsweise Abweichungen von einer Sekunde zugelassen.

Der Referenzdatensatz und der Kommunikationsdatensatz werden nunmehr zur Auswerteeinrichtung 50 übertragen und dort in einem Pufferspeicher abgelegt. Die Testeinheit 40 überträgt beispielsweise per Ethernet und Filetransfer den Referenzdatensatz zu der Auswerteeinrichtung 50, während der Kommunikationsdatensatz von der digitalen Vermittlungsstelle über eine X.25-Verbindung zur Auswerteeinrichtung 50 übertragen werden kann.

Der in dem Pufferspeicher der Auswerteeinrichtung 50 vorliegende Referenzdatensatz und Kommunikationsdatensatz unterscheiden sich beispielsweise in der Datenstruktur und einer unterschiedlichen Codierung. Aus diesem Grund sind Umsetzeinrichtungen in der Auswerteeinrichtung 50 vorgesehen, die das Format des Referenzdatensatzes und das Format des Kommunikationsdatensatzes in ein einheitliches Format konvertieren können.

Die Auswerteeinrichtung 50 prüft zunächst, ob die Struktur des von der digitalen Vermittlungsstelle 20 erzeugten Kommunikationsdatensatzes einer vordefinierten Struktur entspricht. Anschließend wird geprüft, ob die Kommunikationsdaten der in Fig. 2 gezeigten Datenfelder des Kommunikationsdatensatzes innerhalb des jedem Datenfeld zugeordneten Wertebereichs liegen. Wird hierbei festgestellt, daß die Struktur des Kommunikationsdatensatzes oder der Wertebereich eines oder mehrerer Datenfelder über- oder unterschritten worden ist, so wird der Kommunikationsdatensatz als fehlerhaft gekennzeichnet und beispielsweise an der Auswerteeinrichtung 50 signalisiert. Ist der formale Aufbau des Kommunikationsdatensatzes jedoch fehlerfrei, folgt in einem weiteren Schritt der Vergleich des Inhalts jedes Datenfeldes des Referenzdatensatzes mit dem Inhalt des entsprechenden Datenfeldes des Kommunikationsdatensatzes. Beim Vergleich der Datenfelder "Anfangszeitpunkt" und "Endezeitpunkt" des Referenzdatensatzes mit den entsprechenden Datenfeldern des Kommunikationsdatensatzes ist eine Zeitabweichung von beispielsweise einer Sekunde zulässig, ohne daß ein Fehler signalisiert wird. Diese Zeittoleranz trägt der unterschiedlichen Berechnung der Zeitdaten in der Testeinheit 40 und der digitalen Vermittlungsstelle 20 Rechnung. Sofern der Inhalt aller Datenfelder des Referenzdatensatzes und des Kommunikationsdatensatzes übereinstimmt, ist gewährleistet, daß die digitale Vermittlungsstelle 20 eine ordnungsgemäße Entgeltdatenerfassung durchführen kann.

Es sei darauf hingewiesen, daß mit Hilfe der Testeinheit 40 gleichzeitig mehrere Test-Kommunikationsverbindungen über die digitale Vermittlungsstelle 20 aufgebaut werden können. Denkbar ist es auch, daß mehrere Test-Kommunikationsverbindungen über die digitale Vermittlungsstelle 20 zwischen verschiedenen Testeinheiten aufgebaut werden können. Die Auswerteeinrichtung ist hierfür derart ausgebildet, daß die Referenz- und Kommunikationsdatensätze verschiedener Test-Kommunikationsverbindungen parallel ausgewertet und auf Richtigkeit geprüft werden können.

Aus Sicherheitsgründen kann es zweckmäßig sein, während einer bestehenden Kommunikationsverbindung mehrere Kommunikationsdatensätze, nachfolgend Unter-Kommunikationsdatensätze genannt, zu erzeugen, bei denen der Endezeitstempel eines vorhergehenden Unter-Kommunikationsdatensatzes dem Anfangszeitstempel des unmittelbar nachfolgenden Unter-Kommunikationsdatensatzes entspricht, so daß jeder Unter-Kommunikationsdatensatz jeweils eine vorbestimmte Zeitspanne der Gesamtdauer der Kommunikationsverbindung beschreibt. Mit anderen Worten können zu einem verbindungsbezogenen Referenzdatensatz mehrere zusammenhängende verbindungsbezogene Kommunikationsdatensätze existieren. Die Auswerteeinrichtung 50 ist in der Lage, die zu der Test-Kommunikationsverbindung gehörenden Unter-Kommunikationsdatensätze als zusammengehörend zu erkennen, indem geprüft wird, ob alle Kommunikationsdatensätze denselben verbindungsidentifizierenden Dateninhalt enthalten. Darüber hinaus kann die Auswerteeinrichtung 50 die zusammengehörenden Kommunikationsdatensätze einzeln mit dem zugeordneten Referenzdatensatz vergleichen. Ein Unter-Kommunikationsdatensatz wird bei einem Vergleich mit dem entsprechenden Referenzdatensatz als korrekt gekennzeichnet, wenn Form und Inhalt aller Datenfelder mit Ausnahme der Datenfelder "Anfangszeitpunkt " und "Endezeitpunkt" übereinstimmt, und wenn die durch den Anfangszeitstempel und Endezeitstempel eines Unter-Kommunikationsdatensatzes definierte Zeitspanne unter Berücksichtigung der vorgegebenen Toleranz eine Teilmenge der durch den Anfangszeitstempel und Endezeitstempel des Referenzdatensatzes festgelegte Gesamtdauer der Test-Kommunikationsverbindung ist.
Durch die Anfangszeitstempel der zusammengefügten Kommunikationsdatensätze ist eine zeitliche Reihenfolge auf den Kommunikationsdatensätzen definiert. Die Auswerteeinrichtung 50 erkennt die Folge zusammengehörender Kommunikationsdatensätze als korrekt, wenn bei dem jeweils zeitlich unmittelbar folgenden Kommunikationsdatensatz der Anfangszeitstempel dem Endezeitstempel des unmittelbar vorhergehenden Kommunikationsdatensatzes unter Berücksichtigung der vorgegebenen Toleranz entspricht, und wenn die durch den Anfangszeitstempel des ersten Kommunikationsdatensatzes und den Endezeitstempel des letzten Kommunikationsdatensatzes definierte Zeitspanne unter Berücksichtigung der vorgegebenen Toleranz der durch den Anfangszeitstempel und den Endezeitstempel des Referenzdatensatzes festgelegten Gesamtdauer der Test-Kommunikationsverbindung entspricht. Nach Beendigung des Vergleichs des Referenzdatensatzes mit den Kommunikationsdatensätzen kann beispielsweise eine Liste erkannter Fehler ausgegeben werden.

## Patentansprüche

1. System zum Überprüfen der von einer digitalen Vermittlungsstelle (20) erfassten verbindungsbe zogenen Kommunikationsdaten mit folgenden Merkmalen:
- wenigstens eine mit der digitalen Vermittlungsstelle (20) verbindbare Testeinheit (40) mit
einer ersten Speichereinrichtung zum Ablegen von vorbestimmten Kommunikationselementen,
einer Einrichtung zum Einleiten des Aufbaus wenigstens einer vorbestimmten Test-Kommunikationsverbindung,
einer Einrichtung zum Erzeugen eines verbindungsbezogenen Referenzdatensatzes aus den entsprechenden Kommunikationselementen, dem Anfangs- und Endzeitpunkt der Test-Kommunikationsverbindung,
eine Einrichtung zum Übermitteln der verbindungsbezogenen Kommunikationselemente zur digitalen Vermittlungsstelle,
- wobei die digitale Vermittlungsstelle (20) unter Ansprechen auf die empfangenen verbindungsbezogenen Kommunikationslemente die dazugehörende Test-Kommunikationsverbindung herstellt;
- einer der Testeinheit (40) und der digitalen Vermittlungsstelle (20) zugeordneten Auswerteeinrichtung (50) umfassend
eine Einrichtung zum Vergleichen des Inhaltes des verbindungsbezogenen Referenzdatensatzes mit dem Inhalt jedes dazugehörenden verbindungsbezogenen Kommunikationsdatensatzes,
**dadurch gekennzeichnet, dass**
die digitale Vermittlungsstelle eine Einrichtung zum Erzeugen mehrerer Kommunikationsdätensätze für eine Test-Kommunikationsverbindung aufweist, und dass
die Auswerteeinrichtung (50) eine Einrichtung zum Erkennen von Kommunikationsdatensätzen, die einer Test-Kommunikationsverbindung zugeordnet sind, aufweist, und daß
die Vergleichseinrichtung jeden der zusammengehörenden Kommunikationdatensätze mit dem dazugehörenden Referenzdatensatz vergleicht.

2. Prüfsystem nach Anspruch 1, **dadurch gekennzeichnet, daß**
die Auswerteeinrichtung (50) ferner folgende Merkmale aufweist:
eine erste Einrichtung zum Umsetzen des Formates des Referenzdatensatzes in ein vorbestimmtes Format und
eine zweite Einrichtung zum Umsetzen des Formates jedes Kommunikationsdatensatzes in das vorbestimmte Format.

3. Prüfsystem nach Anspruch 1 oder 2, **dadurch gekennzeichnet, daß**
jeder Kommunikationsdatensatz mehrere vorbestimmte Datenfelder umfasst, denen jeweils ein vorbestimmter Wertebereich zugeordnet ist, und daß
die Auswerteeinrichtung (50) zum Überprüfen der Struktur des Kommunikationsdatensatzes und zum Überprüfen jedes Datenfeldes, ob die in einem Datenfeld enthaltenden Kommunikationsdaten innerhalb des jeweiligen Wertebereichs liegen, ausgebildet ist.

4. Prüfsystem nach einem der Ansprüche 1 bis 3, **dadurch gekennzeichnet, daß**
die Auswerteeinrichtung (50) eine Einrichtung zum Prüfen, ob jeder in der digitalen Vermittlungsstelle (20) erzeugte Kommunikationsdatensatz zu einer aufgebauten Test-Kommunikationsverbindung gehört, und/oder ob zu einer aufgebauten Test-Kommunikationsverbindung wenigstens ein Kommunikationsdatensatz erzeugt worden ist, aufweist.

5. Prüfsysstem nach einem der Ansprüche 1 bis 4, **dadurch** gekennzeichent, daß
die Vergleichseinrichtung der Auswerteeinrichtung beim Vergleichen des Inhalts eines oder mehrerer vorbestimmter Datenfelder des Referenzdatensatzes mit dem Inhalt eines oder mehrere Datenfelder jedes entsprechenden Kommunikationsdatensatzes einen vorbestimmten Toleranzbereich berücksichtigt.

6. Prüfsystem nach einem der Ansprüche 1 bis 5, **dadurch gekennzeichnet, daß**
jede Testeinheit (40) eine Puffereinrichtung zum Zwischenspeichern des erzeugten Referenzdatensatzes und die digitale Vermittlungsstelle eine Puffereinrichtung zum Zwischenspeichern jedes erzeugten verbindungsbezogenen Kommunikationsdatensatzes aufweist.

7. Auswertevorrichtung zum Einsatz in einem Prüfsystem nach einem der Ansprüche 1 bis 6, **gekennzeichnet durch** wenigstens eine Schnittstelle zum Verbinden der Auswerteeinrichtung (50) mit einer digitalen Vermittlungsstelle (20);
wenigstens eine Schnittstelle zum Verbinden der Auswertevorrichtung (50) mit einer Testeinheit (40),
**gekennzeichnet durch**
eine Einrichtung zum Erkennen von zusammenhängenden Kommunikationsdatensätzen, die einer Test-Kommunikationsverbindung zugeordnet sind, und
eine Einrichtung zum Vergleichen des Inhaltes eines von der Testeinheit (40) erzeugten verbindungsbezogenen Referenzdatensatzes mit dem Inhalt jedes Kommunikationsdatensatzes von zusammenhängenden Kommunikationsdatensätzen, die die digitale Vermittlungsstelle (20) hinsichtlich einer Test-Kommunikationsverbindung erzeugt.

8. Auswertevorrichtung nach Anspruch 7, **dadurch gekennzeichnet, daß**
die Auswerteeinrichtung (50) ferner folgende Merkmale aufweist:
eine erste Einrichtung zum Umsetzen des Formates des Referenzdatensatzes in ein vorbestimmtes Format und
eine zweite Einrichtung zum Umsetzen des Formates jedes Kommunikationsdatensatzes in das vorbestimmte Format.

9. Auswertevorrichtung nach Anspruch 7 oder 8, **dadurch gekennzeichnet, daß**
jeder Kommunikationsdatensatz mehrere vorbestimmte Datenfelder umfasst, denen jeweils ein vorbestimmter Wertebereich zugeordnet ist, und daß
die Auswerteeinrichtung (50) zum Überprüfen der Struktur des Kommunikationsdatensatzes und zum Überprüfen jedes Datenfeldes, ob die in einem Datenfeld enthaltenden Kommunikationsdaten innerhalb des jeweiligen Wertebereichs liegen, ausgebildet ist.

10. Auswertevorrichtung nach einem der Ansprüche 7 bis 9, **dadurch gekennzeichnet, daß**
die Auswerteeinrichtung (50) eine Einrichtung zum Prüfen, ob jeder in der digitalen Vermittlungsstelle (20) erzeugte Kommunikationsdatensatz zu einer aufgebauten Test-Kommunikationsverbindung gehört, und/oder ob zu einer aufgebauten Test-Kommunikationsverbindung wenigstens ein Kommunikationsdatensatz erzeugt worden ist, aufweist.

11. Auswertevorrichtung nach einem der Ansprüche 7 bis 10, **dadurch gekennzeichent, daß**
die Vergleichseinrichtung der Auswerteeinrichtung beim Vergleichen des Inhalts eines oder mehrerer vorbestimmter Datenfelder des Referenzdatensatzes mit dem Inhalt eines oder mehrere Datenfelder jedes entsprechenden Kommunikationsdatensatzes einen vorbestimmten Toleranzbereich berücksichtigt.

12. Verfahren zum Überprüfen der von einer digitalen Vermittlungsstelle (20) erfassten verbindungsbezogenen Kommunikationsdaten mit folgenden Verfahrensschritten:
a) Ablegen von mehreren Kommunikationselementen in wenigstens einer mit einer digitalen Vermittlungsstelle verbindbaren Testeinheit (40);
b) Einleiten des Aufbaus wenigstens einer vorbestimmten Test-Kommunikationsverbindung an der Testeinheit (40);
c) Übertragen der verbindungsbezogenen Kommunikationselemente zur digitalen Vermittlungsstelle (20) ;
d) Herstellen der dazugehörenden Test-Kommunikationsverbindung unter Ansprechen auf die empfangenen verbindungsbezogenen Kommunikationselemente;
e) Erzeugen eines Referenzdatensatzes aus den verbindungsbezogenen Kommunikationselementen, dem Anfangs- und Endzeitpunkt der entsprechenden Kommunikationsverbindung in der Testeinheit (40);
f) Erzeugen mehrerer zusammenhängender und verbindungsbezogener Kommunikationsdatensätze in der digitalen Vermittlungsstelle (20) ;
g) nach dem Verbindungsabbau werden der Referenzdatensatz und jeder Kommunikationsdatensatz der entsprechenden Test-Kommunikationsverbindung zu einer Auswerteeinrichtung (50) übertragen;
h) Erkennen von zusammenhängenden Kommunikationsdatensätzen, die der Test-Kommunikationsverbindung zugeordnet sind; und
i) Vergleichen des Inhaltes des verbindungsbezogenen Referenzdatensatzes mit dem Inhalt jedes der zusammenhängenden Kommunikationsdatensätzen.

13. Verfahren nach Anspruch 12, **dadurch gekennzeichnet, daß** vor dem Vergleichsschritt h. das Format des Referenzdatensatzes und das Format jedes Kommunikationsdatensatzes in ein einheitliches Format umgesetzt werden.

14. Verfahren nach Anspruch 12 oder 13, **dadurch gekennzeichnet, daß**
jeder Kommunikationsdatensatz mehrere Datenfelder umfasst, daß jedem Datenfeld ein vorbestimmter Wertebereich zugeordnet ist, und daß
in der Auswerteeinrichtung (50) die Struktur jedes Kommunikationsdatensatzes und jedes Datenfeld daraufhin überprüft wird, ob die in jedem Datenfeld enthaltenden Kommunikationselemente innerhalb des jeweiligen Wertebereichs liegen.

15. Verfahren nach Anspruch 14, **dadurch gekennzeichnet, daß** ein Kommunikationsdatensatz als fehlerhaft angezeigt wird, wenn dessen Inhalt nicht dem Inhalt des dazugehörenden Referenzdatensatzes zugeordnet werden kann, wenn dessen Struktur nicht der vorbestimmten Struktur entspricht, oder wenn die in einem Datenfeld enthaltenden Kommunikationsdaten nicht innerhalb des dem Datenfeld zugeordneten Wertebereichs liegen.

## Claims

1. System for checking connection-related communications data acquired by a digital exchange (20), having the following features:
- at least one test unit (40) connectable to the digital exchange (20), said test unit having
a first storage device for storing predetermined communications elements,
having a device for initiating the setup of at least one predetermined test communications connection,
having a device for generating a connection-related reference data record from the corresponding communications elements and the start time and end time of the test communications connection,
a device for transmitting the connection-related communications elements to the digital exchange,
- the digital exchange (20) establishing the associated test communications connection in response to the received connection-related communications elements;
- having an analysis device (50) associated with the test unit (40) and the digital exchange (20), said analysis device comprising
a device for comparing the content of the connection-related reference data record with the content of each associated connection-related communications data record,
**characterized in that**
the digital exchange has a device for creating multiple communications data records for a test communications connection, and **in that**
the analysis device (50) has a device for recognizing communications data records associated with a test communications connection, and **in that**
the comparison device compares each of the contiguous communications data records with the associated reference data record.

2. Test system according to claim 1, **characterized in that** the analysis device (50) further has the following features:
a first device for converting the format of the reference data record into a predetermined format and a second device for converting the format of each communications data record into the predetermined format.

3. Test system according to claim 1 or 2, **characterized in that** each communications data record has multiple predetermined data fields, with a predefined value range being associated with each said field, and **in that**
the analysis device (50) is designed to check the structure of the communications data record and to check each data field as to whether the communications data contained in a data field reside within the appropriate value range.

4. Test system according to any one of claims 1 through 3, **characterized in that** the analysis device (50) has a device for testing whether each communications data record generated in the digital exchange (20) belongs to an established test communications connection and/or whether at least one communications data record has been generated for an established test communications connection.

5. Test system according to any one of claims 1 through 4, **characterized in that** the comparison device of the analysis device takes into account a predetermined tolerance range when comparing the content of one or more predetermined data fields of the reference data record with the content of one or more data fields of each corresponding communications data record.

6. Test system according to any one of claims 1 through 5, **characterized in that** each test unit (40) has a buffer device for buffering the generated reference data record, and the digital exchange has a buffer device for buffering each generated connection-related communications data record.

7. Analysis unit for use in a test system according to any one of claims 1 through 6, **characterized by**
at least one interface for connecting the analysis device (50) to a digital exchange (20);
at least one interface for connecting the analysis device (50) to a test unit (40), **characterized by**
a device for recognizing contiguous communications data records allocated to a test communications connection, and
a device for comparing the content of a connection-related reference data record generated by the test unit (40) with the content of each communications data record of contiguous communications data records created by the digital exchange (20) with regard to a test communications connection.

8. Analysis unit according to claim 7, **characterized in that**
the analysis device (50) further has the following features:
a first device for converting the format of the reference data record into a predetermined format and a second device for converting the format of each communications data record into the predetermined format.

9. Analysis unit according to claim 7 or 8, **characterized in that**
each communications data record comprises multiple predetermined data fields, a predefined value range being associated with each said field, and **in that**
the analysis device (50) is designed to check the structure of the communications data record and to check each data field as to whether the communications data contained in a data field reside within the appropriate value range.

10. Analysis unit according to any one of claims 7 through 9, **characterized in that**
the analysis device (50) has a device for testing whether each communications data record generated in the digital exchange (20) belongs to an established test communications connection and/or whether at least one communications data record has been generated for an established test communications connection.

11. Analysis unit according to any one of claims 7 through 10, **characterized in that**
the comparison device of the analysis device takes into account a predetermined tolerance range when comparing the content of one or more predetermined data fields of the reference data record with the content of one or more data fields of each corresponding communications data record.

12. Method for checking the connection-related communications data acquired by a digital exchange (20), having the following steps:
a) storage of multiple communications elements in at least one test unit (40) connectable with a digital exchange;
b) initiation of the setup of at least one predetermined test communications connection at the test unit (40);
c) transmission of the connection-related communications elements to the digital exchange (20);
d) establishment of the associated test communications connection in response to the received connection-related communications elements;
e) generation of a reference data record from the connection-related communications elements and the start time and end time of the corresponding communications connection in the test unit (40);
f) generation of multiple contiguous and connection-related communications data records in the digital exchange (20);
g) after connection tear-down, the reference data record and each communications data record of the corresponding test communications connection are transmitted to an analysis device (50);
h) recognition of contiguous communications data records associated with the test communications connection; and
i) comparison of the content of the connection-related reference data record with the content of each of the contiguous communications data records.

13. Method according to claim 12, **characterized in that** the format of the reference data record and the format of each communications data record are converted to a uniform format prior to the comparison step h.

14. Method according to claim 12 or 13, **characterized in that** each communications data record comprises multiple data fields, **in that** a predefined value range is associated with each said field, and **in that**
an analysis is performed in the analysis device (50) to check the structure of each communications data record and of each data field as to whether the communications elements contained in each data field reside within the appropriate value range.

15. Method according to claim 14, **characterized in that** a communications data record is flagged as faulty if its content cannot be associated with the content of the related reference data record, if its structure does not correspond to the predefined structure, or if the communications data contained in a data field do not reside within the value range associated with the data field.

## Revendications

1. Système destiné à la vérification des données de communication relatives à la liaison et saisies par une centrale téléphonique numérique (20) avec les caractéristiques suivantes :
- au moins une unité de test (40) pouvant être reliée à la centrale téléphonique numérique (20) comportant un premier dispositif de stockage pour la mémorisation des éléments de communication prédéfinis, une installation destinée au dédenchement de l'établissement d'au moins une liaison de communication d'essai prédéfinie, une installation destinée à la génération d'un enregistrement de référence des éléments de communication correspondants relatif à la liaison, le moment de début et de fin de la liaison de communication d'essai, une installation destinée au transfert des éléments de communication relatifs à la liaison vers la centrale téléphonique numérique,
- la centrale téléphonique numérique (20) établissant la liaison de communication d'essai correspondante en se référant aux éléments de communication reçus et relatifs à la liaison ;
- un dispositif d'analyse (50) affecté à l'unité de test (40) et à la centrale téléphonique numérique (20) comprenant une installation destinée à la comparaison du contenu de l'enregistrement de référence relatif à la liaison avec le contenu de chaque enregistrement de communication correspondant relatif à la liaison,
**caractérisé en ce que** la centrale téléphonique numérique présente un dispositif destiné à la génération de plusieurs enregistrements de communication pour une liaison de communication d'essai, et
**en ce que** le dispositif d'analyse (50) présente un dispositif destiné à la reconnaissance des enregistrements de communication attribués à une liaison de communication d'essai, et
**en ce que** le dispositif de comparaison compare tous les enregistrements de communication associés à l'enregistrement de référence correspondant.

2. Système de vérification selon la revendication 1, **caractérisé en ce que** le dispositif d'analyse (50) comprend en outre les caractéristiques suivantes :
un premier dispositif destiné à la conversion du format de l'enregistrement de référence en un format prédéfini et un second dispositif destiné à la conversion du format de tout enregistrement de communication en ce format prédéfini.

3. Système de vérification selon les revendications 1 ou 2, **caractérisé en ce que** tout enregistrement de communication comprend plusieurs champs de données prédéfinis auxquels une plage de valeurs prédéfinie est attribuée, et
**en ce que** le dispositif d'analyse (50) a été conçu pour la vérification de la structure de l'enregistrement de communication et pour la vérification de chaque champ de données, afin de déterminer si les données de communication contenues dans un champ de données se situent à l'intérieur de la plage de valeurs correspondante.

4. Système de vérification selon l'une des revendications 1 à 3, **caractérisé en ce que** le dispositif d'analyse (50) présente un dispositif destiné à vérifier si chaque enregistrement de communication généré dans la centrale téléphonique numérique (20) appartient à une liaison de communication d'essai établie, et/ou si au moins un enregistrement de communication a été généré par liaison de communication d'essai établie.

5. Système de vérification selon l'une des revendications 1 à 4, **caractérisé en ce que** le dispositif de comparaison du dispositif d'analyse prend en compte une plage de tolérance prédéfinie lors de la comparaison du contenu d'un ou de plusieurs champs de données prédéfinis de l'enregistrement de référence avec le contenu d'un ou de plusieurs champs de données de chaque enregistrement de communication correspondant.

6. Système de vérification selon l'une des revendications 1 à 5, **caractérisé en ce que** chaque unité de test (40) présente un dispositif tampon destiné au stockage intermédiaire de l'enregistrement de référence généré et que la centrale téléphonique numérique présente un dispositif tampon destiné au stockage intermédiaire de tout enregistrement de communication généré et relatif à la liaison.

7. Dispositif d'analyse destiné à l'utilisation dans un système de vérification selon l'une des revendications 1 à 6, **caractérisé par** au moins une interface destinée à relier le dispositif d'analyse (50) à une centrale téléphonique numérique (20) ;
**caractérisé par** au moins une interface pour relier le dispositif d'analyse (50) à une unité de test (40), **caractérisé par** un dispositif destiné à la reconnaissance des enregistrements de communication associés et attribués à une liaison de communication d'essai, et par un dispositif destiné à la comparaison du contenu d'un enregistrement de référence relatif à la liaison et généré par l'unité de test (40) avec le contenu de tout enregistrement de communication provenant d'enregistrements de communication associés et générés par la centrale téléphonique numérique (20) en vue d'une liaison de communication d'essai.

8. Dispositif d'analyse selon la revendication 7, **caractérisé en ce que** le dispositif d'analyse (50) représente en outre les caractéristiques suivantes :
un premier dispositif destiné à la conversion du format de l'enregistrement de référence en un format prédéfini et un second dispositif destiné à la conversion du format de tout enregistrement de communication en ce format prédéfini.

9. Dispositif d'analyse selon les revendications 7 ou 8, **caractérisé en ce que** tout enregistrement de communication comprend plusieurs champs de données prédéfinis auxquels une plage de valeurs prédéfinie est à chaque fois attribuée, et
**en ce que** le dispositif d'analyse (50) a été conçu pour la vérification de la structure de l'enregistrement de communication et pour la vérification de chaque champ de données, afin de déterminer si les données de communication contenues dans un champ de données se situent à l'intérieur de la plage de valeurs correspondante.

10. Dispositif d'analyse selon l'une des revendications 7 à 9, **caractérisé en ce que** le dispositif d'analyse (50) présente un dispositif destiné à vérifier si chaque enregistrement de communication généré dans la centrale téléphonique numérique (20) appartient à une liaison de communication d'essai établie, et/ou si au moins un enregistrement de communication a été généré par liaison de communication d'essai établie.

11. Dispositif d'analyse selon l'une des revendications 7 à 10, **caractérisé en ce que** le dispositif de comparaison du dispositif d'analyse prend en compte une plage de tolérance prédéfinie lors de la comparaison du contenu d'un ou de plusieurs champs de données prédéfinis de l'enregistrement de référence avec le contenu d'un ou de plusieurs champs de données de chaque enregistrement de communication correspondant.

12. Procédé destiné à la vérification des données de communication relatives à la liaison et saisies par une centrale téléphonique numérique (20) avec les étapes de procédé suivantes :
a) mémorisation de plusieurs éléments de communication dans au moins une unité de test (40) pouvant être reliée à une centrale téléphonique numérique ;
b) déclenchement de l'établissement d'au moins une liaison de communication d'essai prédéfinie au niveau de l'unité de test (40) ;
c) transmission des éléments de communication relatifs à la liaison vers la centrale téléphonique numérique (20) ;
d) établissement de la liaison de communication d'essai correspondante en répondant aux éléments de communication reçus et relatifs à la liaison ;
e) génération d'un enregistrement de référence provenant des éléments de communication relatifs à la liaison et du moment de début et de fin de la liaison de communication correspondante dans l'unité de test (40) ;
f) génération dans la centrale téléphonique numérique (20) de plusieurs enregistrements de communication relatifs à la liaison et associés ;
g) l'enregistrement de référence et tout enregistrement de communication de la liaison de communication d'essai correspondante sont transmis à un dispositif d'analyse (50) après l'établissement de la liaison;
h) reconnaissance des enregistrements de communication associés et attribués à la liaison de communication d'essai ; et
i) comparaison du contenu de l'enregistrement de référence relatif à la liaison avec le contenu de chaque enregistrement de communication associé.

13. Procédé selon la revendication 12, **caractérisé en ce qu'**avant d'effectuer l'étape de comparaison h), le format de l'enregistrement de référence et le format de chaque enregistrement de communication sont convertis en un format unique.

14. Procédé selon les revendications 12 ou 13, **caractérisé en ce que** chaque enregistrement de communication comprend plusieurs champs de données,
**en ce qu'**une plage de valeurs prédéfinie est attribuée à chaque champ de données, et
**en ce que**, dans le dispositif d'analyse (50), la structure de chaque enregistrement de communication et de chaque champ de données est contrôlée pour savoir si les éléments de communication contenus dans chaque champ de données se situent à l'intérieur de la plage de valeurs correspondante.

15. Procédé selon la revendication 14, **caractérisé en ce qu'**un enregistrement de communication est affiché comme étant erroné si son contenu ne peut être affecté au contenu de l'enregistrement de référence correspondant, si sa structure ne correspond pas à la structure prédéfinie, ou si les données de communication contenues dans un champ de données ne se situent pas dans la plage de valeurs attribuée au champ de données.
